Europäisches Patentamt

European Patent Office

Office européen des brevets

(11) Publication number: **0 389 151**
**A2**

# (12) EUROPEAN PATENT APPLICATION

(21) Application number: **90302516.1**

(22) Date of filing: **08.03.90**

(51) Int. Cl.5: **G06F 12/08**

(30) Priority: **22.03.89 US 327204**

(43) Date of publication of application:
**26.09.90 Bulletin 90/39**

(84) Designated Contracting States:
**DE FR GB**

(71) Applicant: **International Business Machines Corporation**
**Old Orchard Road**
**Armonk, N.Y. 10504(US)**

(72) Inventor: **Mattson, Richard Lewis**
**6838 Rockview Court**
**San Jose, CA 95120(US)**

(74) Representative: **Grant, Iain Murray**
**IBM United Kingdom Limited Intellectual**
**Property Department Hursley Park**
**Winchester Hampshire SO21 2JN(GB)**

(54) **Partitioned cache memory management.**

(57) Improved performance of the storage system cache memory can be obtained by using a partitioned cache, in which storage data is classified into k categories using a pre-specified scheme of classification, and the cache is partitioned into a global sub-cache and k local sub-caches. When the data is required by the processor, data can be staged from the storage device, or the local sub-caches, to the global sub-cache, with data belonging to one of the categories being pushed from the global sub-cache to a corresponding one of the sub-caches, and additionally pushing data from the sub-caches into the storage device.

Partitioned
Cache

FIG. 3

## PARTITIONED CACHE MEMORY MANAGEMENT

The invention relates to partitioned cache memory management and seeks to provide for the efficient management of cache or buffer memory used between user such as a processor and a storage device such as a hard disk drive.

Under current computer system technologies, processor speeds are increasing more rapidly than disk input/output (IO) speeds, random access memory costs are decreasing more rapidly than disk IO costs, and applications are placing an increasing requirement on system storage size. These trends result in faster and faster processors connected to larger and larger relatively slower disk storage devices. The apparent mismatch between processor speed and disk speed is masked by including larger and larger random access buffers or caches between the processors and the disks.

Database systems such as IMS and DB2 have large buffers of main memory to hold recently referenced database records. Disk controllers use random access memory to hold the most recently referenced track on the disks. A temporary memory of either type is often called a "cache". Data is stored in caches so that if the data is re-referenced, the request can be handled more rapidly than if access to the disk itself were again carried out. The use of caches has led to increasing use of random access memory in the system to achieve more rapid access to data that normally resides on disks.

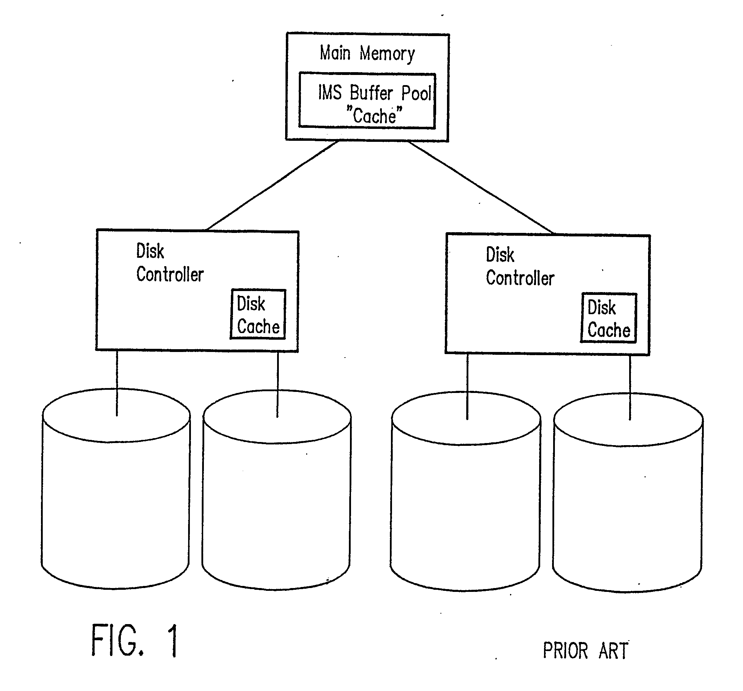

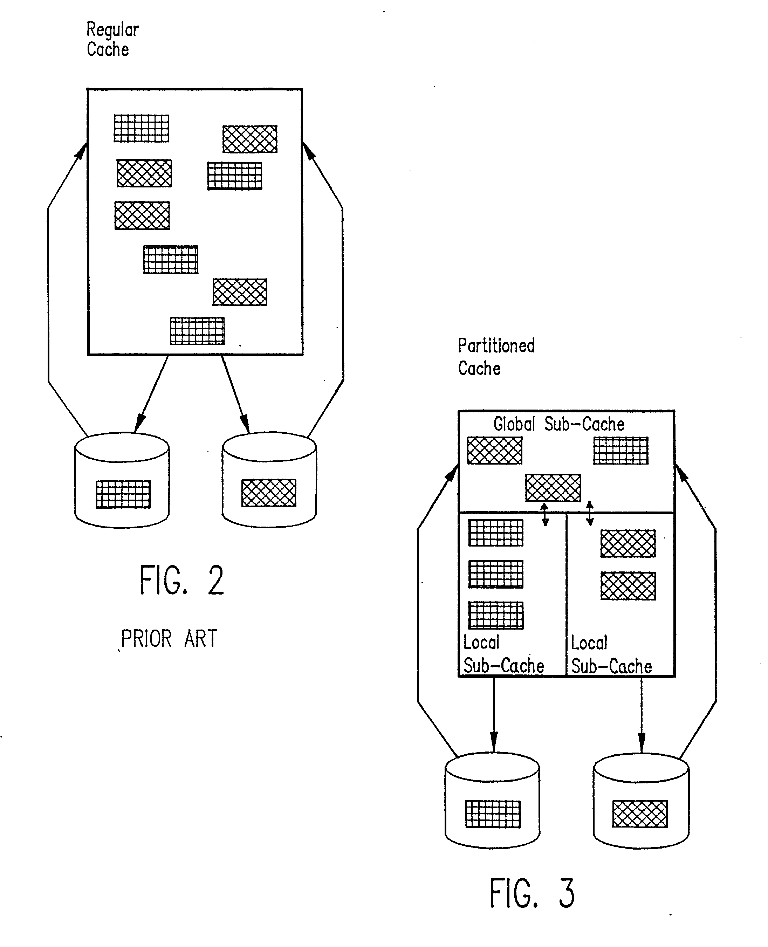

Fig. 1 illustrates a system in which a processor includes main memory. The main memory has a subportion designated as the cache. The main memory of the processor is connected to disk controllers, each of which is connected to one or more disk storage devices. Each disk controller may have its own disk cache. Fig. 2 illustrates in more detail a unified cache as currently used. The cache of one of the disk controllers of the system of Fig. 1 is illustrated, although the principle is applicable to caches in other parts of the system. The cache accepts data of all types, such as data from both disk storage devices attached to the disk controller equally and handles all the data in the same manner. Thus, the two types of data are randomly mixed in the cache.

Previous studies of systems with several caches have considered the caches separately and independently, or have considered "linear hierarchies" in which the memory (storage) technology used in different system levels had different costs and/or access times. Today however, the same memory technology (or nearly the same technology) is used in caches located throughout the system, at the same or different levels. These several caches are independently managed and often contain copies of the same data. For example, an IMS buffer pool in main memory and a control unit cache for disk tracks may use the same memory technology and hold the same data. Neither the conditions under which these multiple caches work well together, nor answers to questions about how much random access memory to put in the system, where to put it, or how to manage it, are known to designers of present day systems.

From one aspect, the invention provides a storage system including main storage, a partitioned cache memory, a system controller and a user interface, wherein the data stored in the system is classified into k categories using a pre-specified scheme of classification and the cache partitioning defines a global sub-cache and k counterpart local sub-caches such that, when data is required via the user interface, it is supplied from the global sub-cache, data being staged from main storage, or form the appropriate local sub-cache, to the global sub-cache, as and if required, with data belonging to one of the categories being pushed from the global sub-cache to the corresponding one of the k sub-caches and other data being pushed from that sub-cache into main storage device, as and if required. Such a system may provide one level in a similarly structured hierarchy.

From another aspect, the present invention provides a method of data promotion in a storage system including main storage, a partitioned cache memory, a system controller and a user interface, wherein the data stored in the system is classified into k categories using a pre-specified scheme of classification and the cache partitioning defines a global sub-cache and k counterpart local sub-caches, the method being such that, when data is required via the user interface, it is supplied from the global sub-cache, data being staged from main storage, or form the appropriate local sub-cache, to the global sub-cache, as and if required, with data belonging to one of the categories being pushed from the global sub-cache to the corresponding one of the k sub-caches and other data being pushed from that sub-cache into main storage device, as and if required.

Hereinafter, there is disclosed a method useful in a staged storage system in which data from a secondary storage device is first staged to a cache before being accessed by a processor. The method includes the steps of classifying storage data into N categories using a pre-specified scheme of classification and partitioning the cache into a global sub-cache and N local sub-caches in such a manner that higher hit ratio can be obtained with the partitioned cache than can be obtained with a regular cache. When data is required by the processor, the method further includes staging data from the secondary storage device or any of the N local sub-caches to the global sub-cache, with data belonging to one of the end categories being pushed from the global sub-cache to a corresponding one of the N local sub-caches, and pushing data from the N sub-caches back to secondary storage.

In more detail, the method is disclosed as comprising :

classifying each stored data item into one of K categories using a pre-specified scheme of classification;

partitioning the cache into a global sub-cache and K category sub-caches;

receiving a request from the host processor for a first data item;

1) if the first data item is located in the global sub-cache, identifying the first data item as the most recently used or highest priority data item in the global sub-cache;

2) if the first data item is not located in the global sub-cache nor in any of the category sub-caches:

removing a second data item from the global sub-cache, wherein the second data item is the least-recently-used or lowest priority data item in the global sub-cache;

noting the data type of the second data item as type k;

removing a third data item from a category sub-cache k, wherein the third data item is the least recently used or lowest priority data item in that category sub-cache k;

placing the second data item into category sub-cache k;

designating the second data item as the most recently used or highest priority data item in category sub-cache k;

3) if the first data item is located in category sub-cache j:

removing a fourth data item from the global sub-cache, wherein the fourth data item is the least recently used or lowest priority data item in the global sub-cache;

noting the data type of the fourth data item as type k;

if type k is different from type j, then:

pre-fetching from the secondary storage into the category sub-cache j the most recently used or highest priority data item of type j that is in neither the global sub-cache nor in category sub-cache j;

removing from the cache the least recently used or lowest priority data item in category sub-cache k;

designating the fourth data item as the most recently used data item in category sub-cache k.

It will be appreciated that the kind of partitioning referred to herein is contrasted with the kind of semi-partitioning inherent when data pages are grouped under a hashing protocol and that kind of partitioning once envisaged in which code and micro-code shared the same paging buffer but there was no staging nor pushing within the buffer.

The present invention will be described further by way of example with reference to an embodiment thereof and contrasting prior art arrangements as illustrated in the accompanying drawings, in which

Fig. 1 is a block diagram of a system including a processor, control system, and disk storage system, including some of its various buffer or cache memories;

Fig. 2 is a diagram of a conventional unitary cache; and

Fig. 3 is a diagram showing the cache partitioned according to the invention into one global sub-cache and two local sub-caches.

The present invention includes a "partitioned cache". The partitioned cache allows the system with several caches to be treated and analysed as one cache partitioned into several sub-caches. Whether the sub-caches are physically separate or physically together and logically partitioned is immaterial. For the purpose of the following description of the preferred embodiment, the partitioned cache will be described in terms of a cache in which the access time and the cost of all the sub-caches is the same. Nevertheless, the invention is also applicable when the time to access a sub-cache and/or the cost of the memory in the sub-cache may be different for different sub-caches.

A partitioned cache is a cache of fixed size that is partitioned logically into $K+1$ sub-caches. One of the sub-caches, called the global sub-cache, accepts all data types, while each of the other K sub-caches accepts only one type of data. Referring to Fig. 3, a cache partitioned into three sub-caches to handle data of two types is illustrated. A global sub-cache accepts data of all types, while each local sub-cache only accepts its corresponding type of data. As illustrated in Fig. 3, the two different types of data could be the data from the two storage devices connected to the controller, so that each of two sub-caches only accepts data from a corresponding storage unit. The global sub-cache accepts data from both storage devices.

The disclosed method will be described in connection with track caching, in which data from a disk track is stored and managed together as a single unit, regardless of the number of records or blocks in that track. The techniques of the invention can also be used in connection with block caching and record caching.

In considering cache performance, a cache "hit" is recorded if a requested piece of data is found in the cache (in any sub-cache). If the requested data is not found in the cache, a "miss" is recorded. The number of hits and/or misses are usually measured during a finite sequence of references called the "reference string" and a cache is the to be effective for that reference string if a high percentage of the references are hits.

Using the partitioned cache shown in Fig. 3, data of different types may be managed both together and separately. Data can belong to different types because of physical placement, like data on one disk volume versus data on another disk volume, or it can belong to different types because of logical placement, like data in one type of file or data set versus data in another type of file or data set. Two different types of data are illustrated in Fig. 3. Each data type has a home in one of two disk storage units.

The requestor makes a sequence of requests. Each request is for data belonging to one and only one of the two disks. If the requested item is in the cache, it is a hit. If the requested item is not in the cache, then it is brought from the disk at the bottom of the drawing to the top level of the cache. This is the global sub-cache. If the global sub-cache is full, the item in the global sub-cache with the lowest priority is pushed from the global sub-cache to its appropriate local sub-cache. Again, there is one local sub-cache for each data type. If the local sub-cache is full, then the pushed item and the other items compete for space in the local sub-cache. The item in the local sub-cache with the lowest priority is pushed from the local sub-cache to its corresponding disk. If the replacement algorithm for the caches is least recently used (LRU), then the item with the lowest priority is the least recently referenced data item.

If the requested data item is in one of the local sub-caches, it is a hit to the cache. The requested item is moved from the local sub-cache to the global sub-cache. If the global sub-cache is full, the data item in the global sub-cache with the lowest priority is then pushed from the global sub-cache. If the pushed item is of the same type as the referenced item, then there will be room for it in the local sub-cache. However, if it is of a different type, then it will be pushed to some other local sub-cache, leaving a hole or empty space in the original sub-cache. How this hole is filled or not filled affects the performance of the partitioned cache.

As disclosed, the method of filling the holes is to pre-fetch the highest priority item from the appropriate storage device or disk. If the cache replacement algorithm is LRU, then from those items on the disk that are not in the cache, the item of the correct type that was most recently referenced is pre-fetched to fill the hole in the local sub-cache. This data flow for LRU replacement is outlined as follows:

1. If the requested item is in the global sub-cache.

    a) The requested item is made the most recently used item in the global sub-cache.

2. If the requested item is not in any sub-cache.

    a) The least recently used item (LRUI) in the global sub-cache, called item I, is logically removed from the global sub-cache and its data type is noted and is called type-k.

    b) The LRUI in local sub-cache-k is pushed out of the cache.

    c) Item I is made the most recently used item in local sub-cache-k.

    d) The requested item is made the most recently used item in the global sub-cache.

3. If the requested item is in local sub-cache-j.

    a) The requested item, called item J, is removed from local sub-cache-j.

    b) The LRUI in the global sub-cache, called item I, is logically removed from the global sub-cache and its data type is noted and is called type-k.

    c) If type-k is different from type-j, then:

        i. the most recently referenced item of type-j which is not in the global sub-cache nor in local sub-cache-j is pre-fetched into sub-cache-j, and

        ii. the LRUI in local sub-cache-k is pushed out of the cache.

    d) Item I is made the most recently used item in local sub-cache-k.

    e) The requested item, item J, is made the most recently used item in the global sub-cache.

## Managing a Cache

A cache may be managed by maintaining a most recently referenced (MRU) list. Pointers are maintained that point to data items in the list. The cache may be managed by changing the pointers to point to different data items and by actually moving the data items into and out of the cache.

## The Conventional Cache

In a cache of size CT, a list is maintained either of the most recently used (MRU) or least recently used (LRU) data item. The control unit uses a pre-established scheme for determining the order in which to list the items in the cache on the LRU or MRU list. The present description will proceed on the assumption that an MRU list is maintained. A pointer (PM) points to the most recently referenced data item. A second pointer (PCT) points to the last (CTth) item in the list as the least recently used or referenced data item in the cache.

In a conventional cache, a request for a data item RT is made. The MRU list is searched to see if RT is in the list. The cache management function then performs the following procedures:

1. If RT is not in the MRU list,

a) the item pointed to by the pointer PCT is pushed out of the cache and the pointer PCT is made to point to the item above it in the MRU list, and

b) the data item RT is added to the list as the most recently referenced item and the pointer PM is made to point to it.

2. If the data item RT is in the list and is between the items pointed to by the pointer PM and PCT,

a) the data item RT is removed from the list, and

b) the data item RT is added to the list as the most recently referenced item and the pointer PM is made to point to it.

Because through the maintenance of the MRU list and the replacement of the least recently referenced data item in the cache, this replacement algorithm is called the least recently used (LRU) replacement algorithm. The regular cache in this way manages data in the cache without regard to the type of data item requested (RT) or pointed to by the pointers PM or PCT.

## The Partitioned Cache

Using the partitioned cache of the invention, each data item is classified into one of a predetermined number (designated K) of categories according to a pre-specified scheme or method of classification. When the processor requests a data item, the list of most recently referenced data items in the cache is searched to determine if the data item is in the cache, and, if so, which sub-cache.

If the requested data item is located in the global sub-cache, the processor can access the data item from there, and the data item is identified as the most recently used data item.

If the requested data item is not located in the global sub-cache, but is in local sub-cache j (one of the K local sub-caches), then the data item may be accessed by the processor from the local sub-cache, and a series of steps is undertaken to logically or physically (LOP) place that data item in the global sub-cache and mark it as the most recently referenced data item.

A second data item is removed from the global sub-cache. This second data item is preferably the least recently used data item in the global sub-cache. The data type of the second (removed) data item is noted, and for the present discussion will be called type k. If the two data items are of the same type (type k is the same as type j), the two data items can simply trade places. Since the second data item bumped from the global cache to the local sub-cache k has been referenced by the processor more recently than any of the other data items of type k in the local sub-cache k, it is then designated the most recently referenced data item in the local sub-cache k. The referenced data item moved from the local sub-cache to the global sub-cache may then be designated the most recently referenced data item in the global sub-cache.

If the second data item bumped from the global sub-cache (of type k) is not of the same type as the referenced data item (type j) that is taken from the local sub-cache j, a place in the local sub-cache k must be made available for the second data item and a spot in the local sub-cache j is made available for a data item of type j from the storage device.

Preferably, the least recently used data item in the local sub-cache k is bumped from the local sub-cache to make room for the data item of type k bumped from the global sub-cache. The data item moved from the global sub-cache to the local sub-cache has been referenced by the processor more recently than any of the other data items in the local sub-cache k, so it may be designated as the most recently used data item in the local sub-cache k. The data item that had previously been the next least recently used data item in that sub-cache is then marked as the least recently used data item in the sub-cache.

If the data item of type j in the storage device (and not in the cache) is staged to the local sub-cache j to fill the available position in that sub-cache, that data item is then available for reference by the processor, which may improve the performance of the cache. The data item moved from the storage device to the cache is marked as the least recently referenced data item in the sub-cache j.

If the data item referenced by the processor is not in the cache, it must be brought up from the storage device, and a place made available for it in the global sub-cache. A second data item is removed from the global sub-cache to make room there for the newly referenced data. The second data item has a data type k, and is preferably the least recently used data item in the global sub-cache. The second data item removed from the global sub-cache is to be placed in the local sub-cache k as the most recently referenced data item in that local sub-cache. Thus, the least recently used data item in the local sub-cache k is removed, and the next least recently referenced data item in local sub-cache k is marked as the least recently used date item.

In a partitioned cache of total size CT, the global sub-cache may have size C0, and the local sub-caches may have sizes C1, C2 ..., CK. A single MRU list is maintained with a pointer PM that points to the most recently referenced data item in the list. A second pointer PC0 points to the (C0)th item in the list as the least recently referenced data item in the global sub-cache. In addition, pointers PC1, PC2, ... PCK point to the least recently referenced item in each local sub-cache. Each pointer PCk for k other than 0 ($1<k\le K$) is established by starting with the item in the MRU list just after the (C0)th item, and continuing down the list until Ck items from data set k are encountered. The pointer PCk is made to point to that item in the list.

When a request is made by the processor to reference a data item RT, the MRU list is searched to see if the data item RT is in the list. The cache controller then operates according to the following outline:

1. If the data item RT is not in the MRU list:

a) the item pointed to by the pointer PC0 is logically or physically (LOP) pushed out of the global sub-cache and the pointer PC0 is made to point to the item above it in the MRU list;

b) if the pushed item is of type k, then the item pointed to by the pointer PCk is LOP pushed out of the local sub-cache k and the pointer PCk is made to point to the next item above it in the MRU list that is of type k (but never above PC0; and

c) the data item RT is added to the list as the most recently referenced item and the pointer PM is made to point to it.

2. If the data item RT is in the MRU list and is between the items pointed to by the pointers PM and PC0:

a) the data item RT is removed from the list; and

b) the data item RT is added to the list as the most recently referenced item and the pointer PM is made to point to it.

3. If the data item RT is in the list, is of type j and is after the item point to by the pointer PCj,

a) the data item RT is removed from the list, and

b) the item pointed to by the pointer PC0 is LOP pushed out of the global sub-cache and the pointer PC0 is made to point to the item above it in the MRU list.

c) if the pushed data item is of type k, then the item pointed to by the pointer PCk is LOP pushed out of the local sub-cache k and the pointer PCk is made to point to the next item above it in the MRU list that is of type k.

d) the data item RT is added to the list as the most recently referenced item and the pointer PM is made to point to it.

4. If the data item RT is in the list, is of type k, is after the item pointed to by the pointer PC0, and is before the item pointed to by the pointer PCk,

a) the data item RT is removed from the list, and

b) the item pointed to by the pointer PC0 is pushed out of the global sub-cache and the pointer PC0 is made to point to the item above it in the MRU list.

c) if the pushed item is also of type k, then the data item RT is added to the list as the most recently referenced item and the pointer PM is made to point to it.

5. If the data item RT is in the list, is of type j, is after the item pointed to by the pointer PC0, and is before the item pointed to by the pointer PCj,

a) the data item RT is removed from the list, and

b) the item pointed to by the pointer PC0 is LOP pushed out of the global sub-cache and the pointer PC0 is made to point to the item above it in the MRU list.

c) if the pushed item is of type k, not type j, then the item pointed to by the pointer PCk is LOP pushed out of the local sub-cache k and the pointer PCk is made to point to the next item above it in the MRU list that is of type k.

d) the pointer PCj is made to point to the next item below it in the MRU list that is of type j. That is, an item is pre-fetched into the local sub-cache for items of type j.

e) the data item RT is added to the list as the most recently referenced item and the pointer PM is made to point to it.

While the invention has been particularly shown and described with reference to dynamic cache management between a processor and a disk storage device, the invention may also be used to control other cache operations in other environments.

## Claims

1. A storage system including main storage, a partitioned cache memory, a system controller and a user interface, wherein the data stored in the system is classified into k categories using a pre-specified scheme of classification and the cache partitioning defines a global sub-cache and k counterpart local sub-caches such that, when data is required via the user interface, it is supplied from the global sub-cache, data being staged from main storage, or form the appropriate local sub-cache, to the global sub-cache, as and if required, with data belonging to one of the categories being pushed from the global sub-cache to the corresponding one of the k sub-caches and other data being pushed from that sub-cache into main storage device, as and if required.

2. A system as claimed in claim 1, wherein the controller is arranged to maintain:

a most recently referenced pointer that identifies the data item stored in the global sub-cache, irrespective of category, most recently referenced via the user interface, as determined by a pre-established formula;

a global least recently referenced pointer that identifies the data item stored in the global sub-cache least recently referenced via the user interface, as determined by the pre-established formula; and

K category pointers, each of which identifies the least recently referenced or lowest priority data item of its corresponding category in the corresponding sub-cache; whereby

by staging required data via the subcache corresponding to its category and pushing data indicated by the global and corresponding category pointers the controller is able to store data items most recently referenced by the processor in the global sub-cache and, in each of K category sub-cache, only data items of the corresponding category.

3. A system as claimed in either preceding Claim, as part of a hierarchy of such systems, the user interface interfacing with a processor or with the cache of the next lower system and main storage being able to be the cache of the connected next higher system.

4. A system as claimed in Claim 3, wherein when a data item requested via the user interface is already stored in one of the category sub-caches, the data item is staged to the global sub-cache, and a data item of the same category in main storage is staged into that category sub-cache.

5. A method of data promotion in a storage system including main storage, a partitioned cache memory, a system controller and a user interface, wherein the data stored in the system is classified into k categories using a pre-specified scheme of classification and the cache partitioning defines a global sub-cache and k counterpart local sub-caches, the method being such that, when data is required via the user interface, it is supplied from the global sub-cache, data being staged from main storage, or form the appropriate local sub-cache, to the global sub-cache, as and if required, with data belonging to one of the categories being pushed from the global sub-cache to the corresponding one of the k sub-caches and other data being pushed from that sub-cache into main storage device, as and if required.

6. A method as claimed in Claim 5, wherein the cache and data are partitioned by:

dividing the cache into k category sub-caches and a global sub-cache;

identifying each data item in main storage as belonging to one of k categories of data items, each category corresponding to one of the category sub-caches;

storing in each of at least some of the k local sub-caches a plurality of data items belonging to the corresponding data category;

storing in a global sub-cache data items belonging to any of the data categories: and

when attempting to reference a first data item and, if the first data item is not located in the global sub-cache nor in any of the category sub-caches:

removing a second data item from the global sub-cache, wherein the second data item is the least-recently-used or lowest priority data item in the global sub-cache;

noting the data type of the second data item as type k;

removing a third data item from a category sub-cache k, wherein the third data item is the least recently used or lowest priority data item in category sub-cache k;

placing the second data item into category sub-cache k; designating the second data item as the most recently used or lowest priority data item in category sub-cache k.

7. A method as claimed in Claim 6, additionally comprising referencing a first data item and, if the first data item is stored in the global sub-cache, identifying the first data item as the most recently used or highest priority data item in the global sub-cache and wherein pointers are maintained to identify the highest priority data item in the global sub-cache and the lowest priority data items in each sub-cache.

8. A method as claimed in either Claim 6 or Claim 7, additionally comprising referencing a first data item and, if the first data item is stored in local sub-cache j:

removing a second data item from the global sub-cache, wherein the second data item is the least recently used or lowest priority data item in the global sub-cache;

noting the data type of the second data item as type k; if type k is different from type j, then:

pre-fetching from the storage device into the category sub-cache j the most recently used or highest priority data item of type j that is in neither the global sub-cache nor in category sub-cache j;

removing from the composite cache the least recently used or lowest priority data item in category sub-cache k; and

designating the second data item as the most recently used or highest priority data item in category sub-cache k.

9. In a staged storage system in which data from a secondary storage is first staged to a cache before being accessed by a processor, a method comprising:

classifying each stored data item into one of K categories using a pre-specified scheme of classification;

partitioning the cache into a global sub-cache and K category sub-caches;

receiving a request from the host processor for a first data item;

1) if the first data item is located in the global sub-cache, identifying the first data item as the most recently used or highest priority data item in the global sub-cache;

2) if the first data item is not located in the global sub-cache nor in any of the category sub-caches:

removing a second data item from the global sub-cache, wherein the second data item is the least-recently-used or lowest priority data item in the global sub-cache;

noting the data type of the second data item as type k;

removing a third data item from a category sub-cache k, wherein the third data item is the least recently used or lowest priority data item in that category sub-cache k;

placing the second data item into category sub-cache k;

designating the second data item as the most recently used or highest priority data item in category sub-cache k;

3) if the first data item is located in category sub-cache j: removing a fourth data item from the global sub-cache, wherein the fourth data item is the least recently used or lowest priority data item in the global sub-cache;

noting the data type of the fourth data item as type k;

if type k is different from type j, then:

pre-fetching from the secondary storage into the category sub-cache j the most recently used or highest priority data item of type j that is in neither the global sub-cache nor in category sub-cache j;

removing from the cache the least recently used or lowest priority data item in category sub-cache k;

designating the fourth data item as the most recently used data item in category sub-cache k.

FIG. 1

PRIOR ART

Regular
Cache

FIG. 2

PRIOR ART

Partitioned
Cache

FIG. 3